# EUROPEAN PATENT SPECIFICATION

(11) **EP 2 348 945 B1**
(45) Date of publication and mention of the grant of the patent: **14.08.2013**
(21) Application number: 09796063.7
(22) Date of filing: 26.10.2009
(51) Int. Cl.: A47L 15/42, D06F 39/08

(54) **DEVICE FOR DETECTING THE LIQUID LEVEL IN THE WASHING BATH OF A WASHING MACHINE**
VORRICHTUNG ZUM MESSEN DES FÜLLSTANDES DES WASCHBADS EINER WASCHMASCHINE
DISPOSITIF POUR MESURER LE NIVEAU DE LIQUIDE DANS LA CUVE D'UNE MACHINE À LAVER

(30) Priority: 28.10.2008 IT TO20080796
(43) Date of publication of application: 03.08.2011
(73) Proprietor: ELBI International S.p.A., 10129 Torino (IT)
(72) Inventor: FARANO, Michele, I-10137 Torino (IT); MAROZZO, Marco, I-10044 Pianezza (Torino) (IT)
(74) Representative: Quinterno, Giuseppe
(86) International application number: PCT/IB2009/054722
(87) International publication number: WO 2010/049873

(56) References cited:
- EP-A- 1 726 702
- DE-A1- 19 835 865
- DE-A1-102006 020 151
- FR-A- 2 514 526
- US-A- 3 064 094
- US-A1- 2004 211 228

## Description

The present invention relates to a device for detecting the level of a liquid in a container, particularly a device for detecting the level of the washing bath in a washing machine such as a laundry washing machine or a dishwasher.

More specifically, the invention relates to a detector device comprising:
a hollow body wherein there is defined an inner region which is divided into first and second chambers which are sealingly separated from one another by a resilient diaphragm, the first chamber having an inlet opening intended to be put in pneumatic communication with the region of the container located above said liquid, the second chamber communicating with the atmosphere;
a winding mounted in a fixed position in the body, on the side opposite the first chamber with respect to the diaphragm;
a core coupled to the diaphragm and movable with respect to the winding such that in operation the inductance of the winding varies as a function of the position of said core; and
first resilient means tending to move the core towards the diaphragm and second resilient means tending to oppose the action of the first resilient means.

A detector device of the above-defined kind is disclosed in DE-A-19835865.

A known device of this type for laundry washing machines is located outside the washing bath with the opening of the aforesaid first chamber connected through a pipe, which is generally flexible, to an "air trap" mounted in the washing bath in the vicinity of the level of the washing bath which is to be detected. The "air trap" can be simply a kind of cup in an inverted position with a top opening connected to the level detector device through the aforesaid flexible pipe.

The known solution described above has a number of drawbacks. In the first place, it requires the use of the detector device and the air trap and their interconnection by means of a flexible pipe, typically using hose clamps.

One object of the present invention is to provide an improved device for detecting the level of a liquid in a container by means of which the level of the liquid can be detected directly, without using an "air trap" and without connecting pipes.

This and other objects are achieved according to the invention with a detector device of the type defined above, the principal feature of which resides essentially in the fact that the aforesaid resilient means are located in the aforesaid second chamber.

The detector device according to the invention can be mounted directly in the washing bath of a washing machine, in such a way that the inlet opening or mouth of its aforesaid first chamber faces the liquid (the washing bath) in operation, and can be closed by the liquid when the level of the latter rises above a predetermined level, such that the first chamber then acts as an air trap.

The aforesaid second resilient means, which can be made, for example, in the form of a spiral spring, are protected from direct contact with the washing bath and from any foreign bodies contained therein, such as lint or other residues.

Further features and advantages of the invention will be made clear by the following detailed description, provided purely by way of non-limiting example, with reference to the appended drawings, in which:
Figure 1 is a view in axial section of a device for detecting the level of a liquid according to the present invention;
Figure 2 is a plan view of a spiral spring included in the device according to Figure 1;
Figure 3 is a view in elevation of a spool member included in the device according to Figure 1;
Figures 4 and 5 are sectional views, essentially taken through the line IV-IV (V-V) of Figure 1, in a first and second stage, respectively, of the mounting of the spiral spring in the spool member;
Figure 5a is a partial perspective view of the spool member; and
Figure 6 is a partial view in elevation similar to that shown in Figure 3, and corresponds to the stage of mounting of the spring shown in Figure 5.

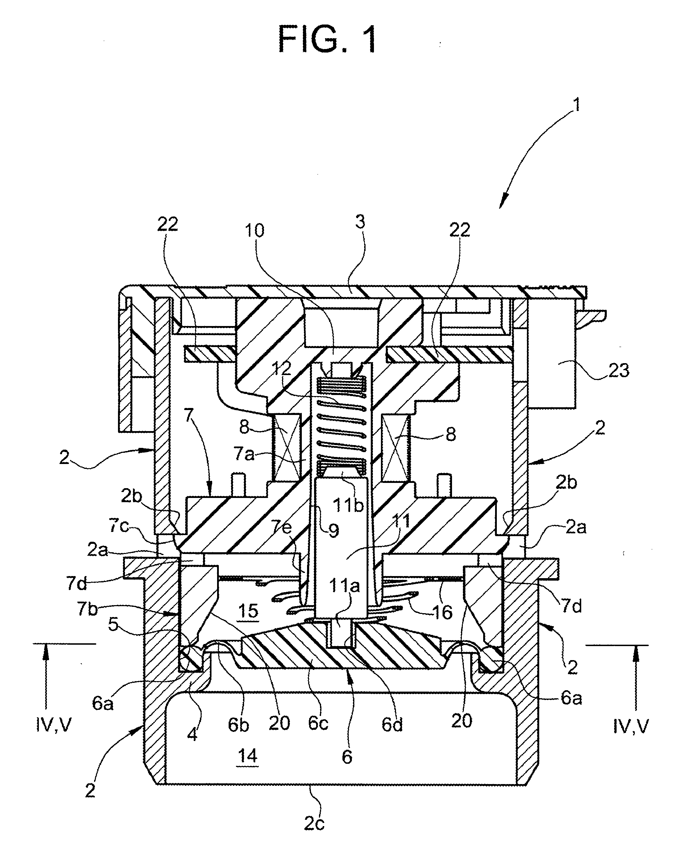

In Figure 1, the number 1 indicates the whole of a device according to the invention for detecting the level of a liquid in a container, particularly for detecting the level of the washing bath in a washing machine.

In the embodiment illustrated by way of example, the device 1 comprises an essentially cylindrical tubular body 2, made for example from moulded plastic material.

The body 2 is closed at its top by a cover 3, which is preferably removable.

In its lower part, the body 2 is provided internally with a collar-like annular formation 4, which has an essentially L-shaped cross section. An annular channel 5, open at its top, is formed between the essentially vertical branch of this formation and the wall of the body 2.

The number 6 indicates a diaphragm, made for example from elastomeric material.

This diaphragm has a peripheral ring 6a, fitted in the channel 5 of the body 2. The ring 6a is joined to an intermediate annular portion 6b of the diaphragm 6, which is highly flexible, and which is joined in turn to a central portion 6c of said diaphragm, which is essentially thicker and therefore relatively more rigid. A recess or indentation 6d is formed in the central part of the upper surface or face of the diaphragm 6.

The number 7 in Figure 1 indicates the whole of a member shaped in the form of a spool. This member 7 is made, for example, from moulded plastic material, and has an intermediate portion 7a of reduced diameter, around which a winding 8 of insulated electrical wire is wound.

The member 7 has a lower portion 7b, which is essentially bell-shaped and has a larger diameter. This bell-shaped portion 7b has a circumferential projection 7c, bevelled or rounded towards its lower part and towards the axis.

Immediately below this projection, the portion 7b of the spool member 7 has a plurality of essentially radial through holes 7d.

The member 7 is inserted into the body 2 through the upper end of the latter, and is therefore mounted in the position shown in Figure 1, in which its lower end retains the peripheral ring 6a of the diaphragm 6 in the annular seat 5 of the body 2.

In the assembled condition shown in Figure 1, portions remote from the rounded projection 7c are engaged by snap-fitting with corresponding radial holes 2a in the body 2, immediately beyond corresponding inner projections 2b of the body.

The holes 2a in the body 2 communicate at least partially with the holes 7d of the spool member 7, for reasons which are explained below.

The spool member 7 is axially traversed by a passage 9 which is open below and which is closed at its top by a transverse partition 10 integral with the member 7. This passage 9 extends downwards to the end of a tubular appendage 7e of the member 7, which extends downwards to a certain distance from the diaphragm 6.

The number 11 indicates a movable core, made from ferromagnetic material for example, mounted in the passage 9 of the body 7.

In the illustrated embodiment, the core 11 has a lower shank 11 a engaged in the central indentation or recess 6d of the diaphragm 6, and a tapered upper protuberance 11b.

A helical spring 12 is positioned in the passage 9 of the member 7, between the upper end of the core 11 and the partition 10. This spring tends to push the core 11 towards the diaphragm 6.

The diaphragm 6 divides the inner region enclosed by the body 2 and by the lower portion 7b of the spool member 7 into two chambers 14 and 15 which are sealingly separated from each other.

The chamber 14 opens downwards at the position of the wide mouth 2c of the lower end of the tubular body 2.

The chamber 15 is in permanent communication with the atmosphere surrounding the device 1, via the holes 7d of the spool member 7 and the holes 2a of the body 2.

The number 16 indicates a further spring which is of the spiral type in the illustrated embodiment. This spring is positioned in the chamber 15, and is therefore located between the diaphragm 6 and the spool member 7, and in particular it surrounds the tubular appendage 7e of the latter.

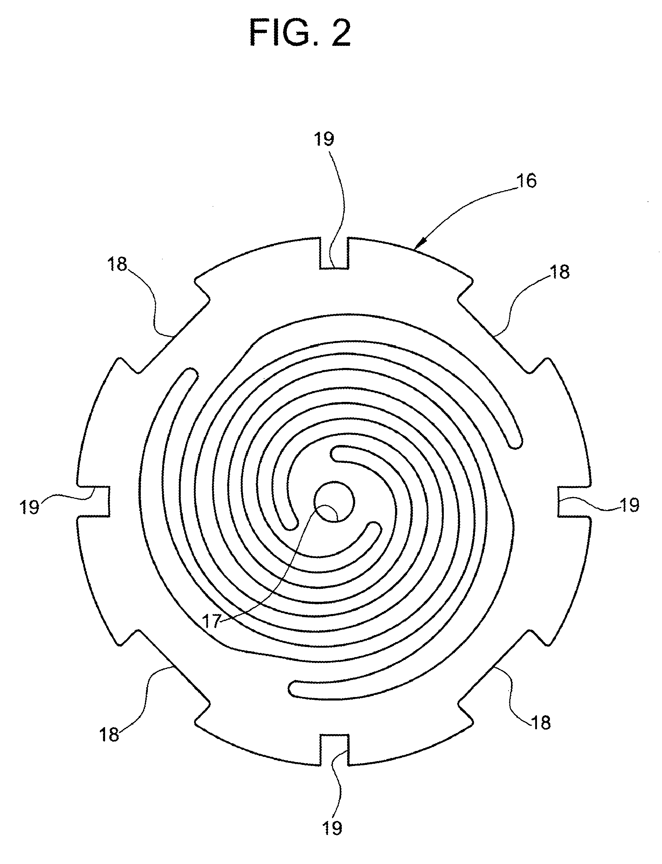

At rest, the spring 16 is essentially flat, as shown in Figure 2. It has a central hole 17 (Figure 2) through which the lower shank 11a of the core 11 extends (Figure 1).

The arrangement is such that the spring 12 pushes the core 11 downwards, in such a way that the lower end of the core deforms the flat spring 16, making it assume the configuration shown in Figure 1.

The periphery of the spring 16 is fastened to the lower portion 7b of the spool member 7 as described below.

With reference to Figure 2, in the illustrated embodiment the spring 16 has an indented peripheral edge, with four cut-outs 18 spaced at equal angular intervals, alternating with cut-outs 19 which are also equally spaced but have smaller angular extensions.

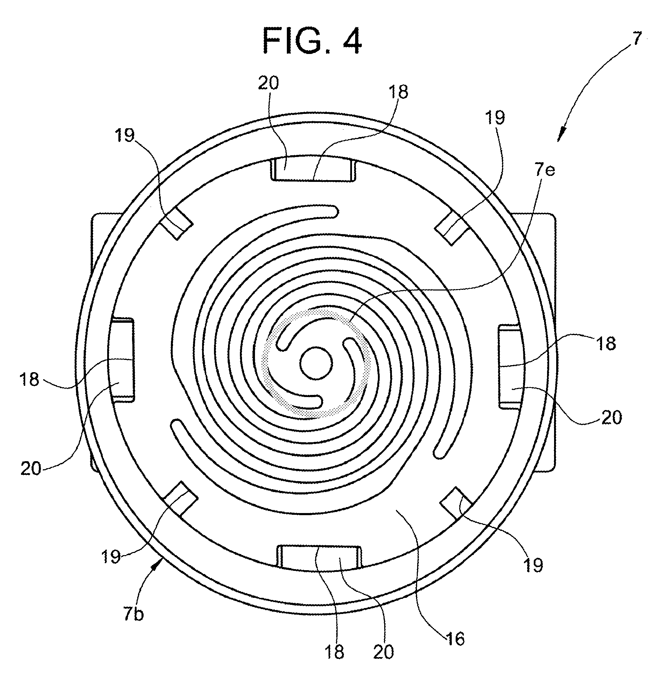

As shown in Figures 1, 4, 5 and 5a, the inner surface of the lower shell 7b of the spool member 7 has four protuberances 20, spaced at equal angular intervals, each next to a hole 7d of this member.

The protuberances 20 have cross sections which are essentially complementary to those of the larger cut-outs 18 of the spiral spring 16.

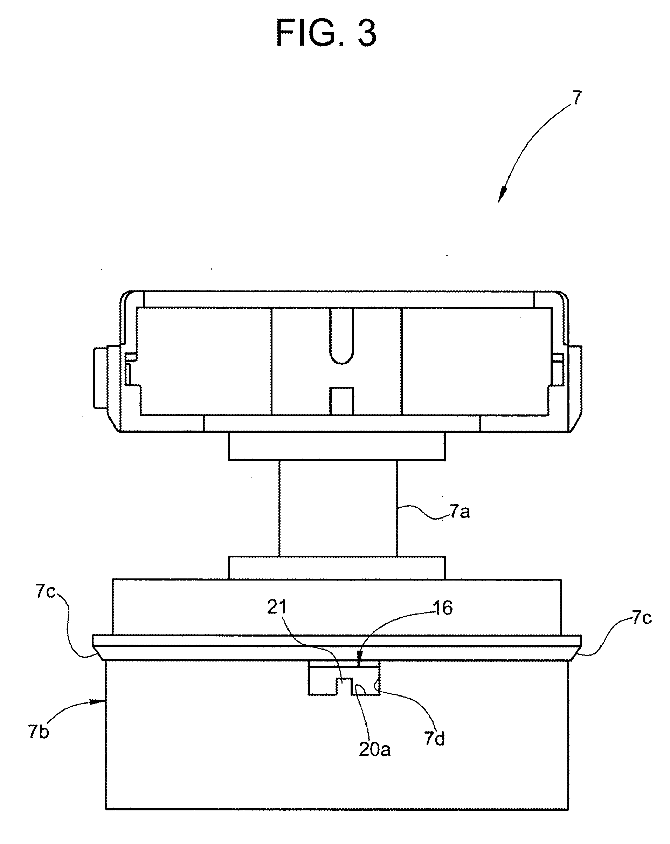

As shown more fully in Figures 3, 5a and 6, each protuberance 20 terminates at its top in a flat surface 20a, next to the associated hole 7d. A corresponding projection 21 extends centrally from this flat surface 20a, the height of this projection being less than that of the hole 7d. The projection extends in an essentially radial direction, and its radially inner portion has a profile, in plan view, essentially complementary to that of the smaller cut-outs 19 of the spiral spring 16.

Accordingly, the fitting of the spring 16 into the lower portion 7b of the spool member takes place essentially in the following manner.

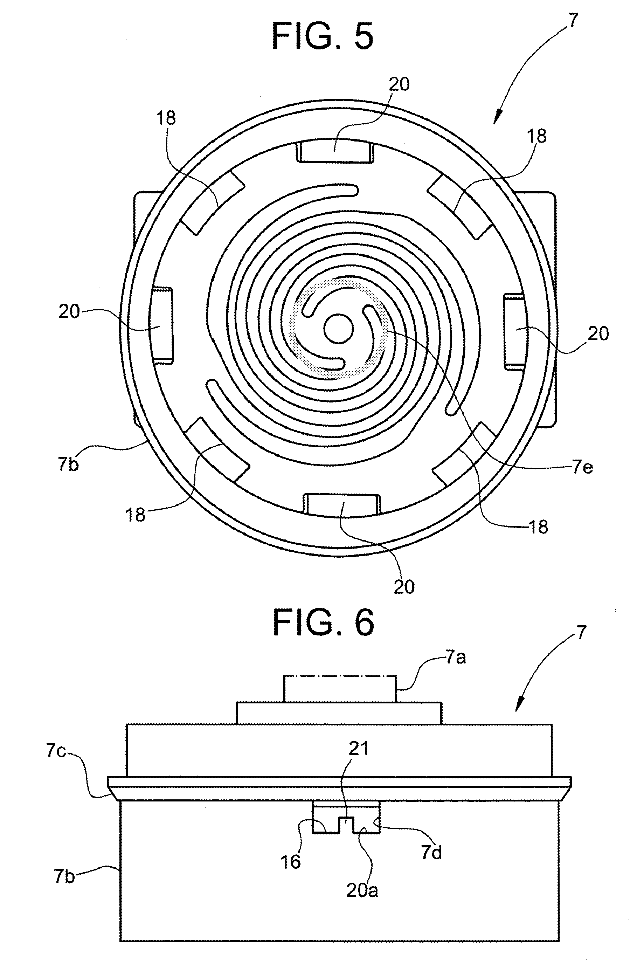

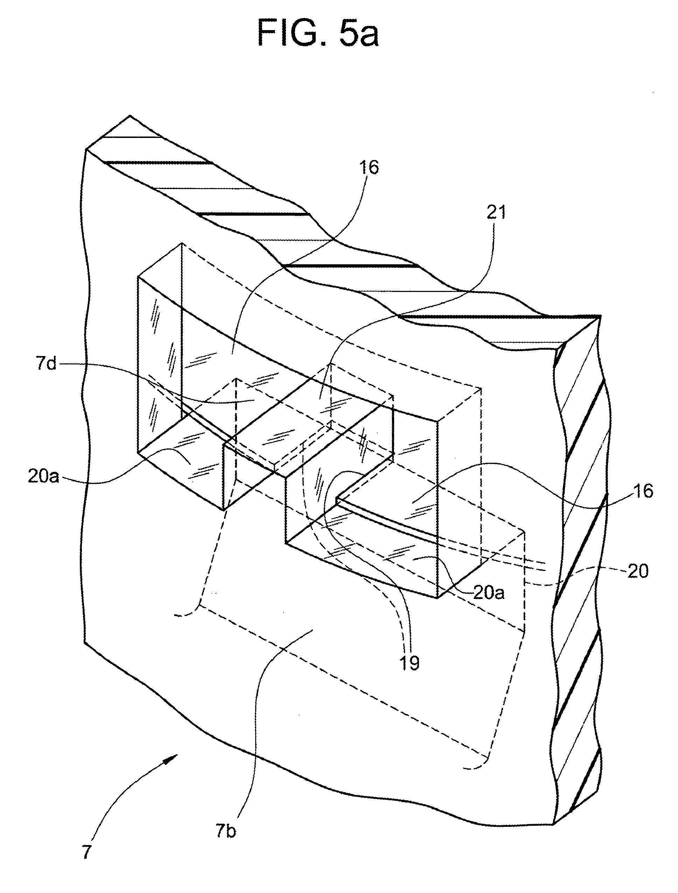

The spring 16 is inserted through the lower hole of said portion 7b of the spool member 7, with the larger cut-outs 18 sliding in a guided way along the corresponding protuberances 20. The translation of the spring 16 continues until its periphery is carried beyond the top of the projections 21 of the holes 7d, as shown in Figure 3. In this condition, the spring 16 is rotated through 45°, until its smaller cut-outs 19 are angularly aligned with the corresponding projections 21 of the spool member. When this alignment has been completed, the spring 16 is allowed to fall back in such a way that its cut-outs 19 and the projections 21 are coupled together so that the assembled condition shown in Figures 5a and 6 is obtained. In this condition, the peripheral portions of the spring 16 adjacent to the cut-outs 19 bear on the flat surfaces 20a located on the tops of the protuberances 20, as shown for example in Figure 5a.

The procedure for coupling and mounting the spring 16 on the spool member 7 is essentially what is known as a bayonet coupling procedure.

With reference to Figure 1, the winding or coil 8 is connected to a processing circuit of a known type, conveniently mounted at least partially on a supporting plate 22 mounted in the upper portion of the spool member 7, and connectable to external circuits or devices through a connector 23 formed in the body 2 of the device 1.

The detector device 1 described above is suitable for use in the washing bath of a washing machine, particularly a laundry washing machine, in such a way that its lower opening or mouth 2c can be closed by the body of washing liquid contained in this bath when its level rises above a predetermined reference level. In this condition, the chamber 14 of the device 1 acts in exactly the same way as an air trap. The air trapped in the chamber 14 is pressurized by the tendency of the washing bath to rise further. The increase in pneumatic pressure in the chamber 14 causes the upward displacement of the diaphragm 6, and consequently the core 11, with respect to the winding 8. The inductance of this winding varies accordingly, and this variation can be detected, for example in the form of a variation of the frequency of an LC resonant circuit.

The direct exposure of the level detector device 1 to the washing bath is made possible, in particular, by the fact that the spring 16 is housed safely in the chamber 15 which is sealingly separated from the chamber 14 into which said washing liquid or bath can penetrate.

If a loss of sealing between the chambers 14 and 15 occurs after prolonged operation, for example as a result of a tear in the diaphragm 6, any liquid entering the chamber 15 can be removed through the holes 7d of the spool member 7 and the corresponding holes 2a of the body 2 of the device.

Naturally, the principle of the invention remaining the same, the forms of embodiment and the details of construction may be varied widely with respect to those described and illustrated, which have been given purely by way of non-limiting example, without thereby departing from the scope of the invention as defined by the attached claims.

## Claims

1. A device (1) for detecting the level of a liquid in a container, particularly the washing bath of washing machine, comprising
a hollow body (2) wherein there is defined an inner region (14, 15) which is divided into first and second chambers (14, 15) which are sealingly separated from one another by a resilient diaphragm (6), the first chamber (14) having an inlet opening (2c) intended to be put in pneumatic communication with the region which in the container is above said liquid, the second chamber (15) communicating with the atmosphere;
a winding or coil (8) mounted in a fixed position in the body (2), on the side opposite the first chamber (14) with respect to the diaphragm (6);
a core (11) coupled to the diaphragm (6) and movable with respect to the winding (8) such that in the operation the inductance of the winding (8) varies as a function of the position of said core (11); and
first resilient means (12) tending to move the core (11) towards the diaphragm (6) and second resilient means (16) tending to oppose the action of the first resilient means (12);
the detecting device (1) being **characterized in that** said second resilient means (16) is disposed in said second chamber (15).

2. A device (1) according to claim 1, wherein said second resilient means comprises a spiral spring (16) whose peripheral portion is mounted in the body (2) by a coupling which is essentially of the bayonet type.

3. A device (1) according to claim 2, wherein the winding (8) is carried by a spool member (7) mounted in the body (2) and having an hollow lower portion (7b) in which there is mounted said spiral spring (16).

4. A device (1) according to claim 3, wherein the spiral spring (16) has first guiding cut-outs (18) alternated with second coupling cut-outs (19), and said hollow portion (7b) of the spool member (7) has a plurality of guiding protuberances (20) adapted to engage with said first cut-outs (18) of the spring (16) to allow the introduction of the spring (16) in the spool member (7) up to a position in which the spring (16) is capable of being rotated such that the coupling cut-outs (19) are aligned and capable of being coupled with corresponding retaining formations (21) of said lower portion (7b) of the spool member (7).

5. A container for a liquid, particularly a washing chamber of a washing machine, comprising a device (1) for detecting the level of the liquid according to one or more of the preceding claims, mounted in such a way that the opening or mouth (2c) of said first chamber (14) in the operation faces said liquid and is intended to be closed by the liquid when the level thereof increases above a predetermined level, said first chamber (14) operating in such a situation as an air trap.

## Patentansprüche

1. Vorrichtung (1) zum Detektieren des Füllstands einer Flüssigkeit in einem Behälter, insbesondere des Waschbads einer Waschmaschine, mit
einem hohlen Körper (2), in welchem ein Innenbereich (14,15) umgrenzt ist, der in eine erste und eine zweite Kammer (14,15) unterteilt ist, die durch eine nachgiebige Membran (6) auf dichte Weise voneinander getrennt sind, wobei die erste Kammer (14) eine Einlassöffnung (2c) aufweist, die in pneumatische Verbindung mit dem Bereich, der in dem Behälter oberhalb der Flüssigkeit ist, gebracht werden soll, und wobei die zweite Kammer (15) mit der Umgebungsatmosphäre in Verbindung steht;
einer Wicklung oder Spule (8), die in einer festen Position in dem Körper (2) an der derjenigen Seite angebracht ist, die der ersten Kammer (14) bezüglich der Membran (6) gegenüberliegt;
einem Kern (11), der mit der Membran (6) gekoppelt ist und bezüglich der Wicklung (8) bewegbar ist, so dass in Betrieb die Induktanz der Wicklung (8) sich als Funktion der Position des Kerns (11) ändert; und
ersten Federeinrichtungen (12), die versuchen, den Kern (11) zu der Membran (6) hinzubewegen, und zweiten Federeinrichtungen (16), die versuchen, den ersten Federeinrichtungen (12) entgegenzuwirken;
wobei die Detektionsvorrichtung (1) **dadurch gekennzeichnet ist, dass** die zweite Federeinrichtung (16) in der zweiten Kammer (15) angeordnet ist.

2. Vorrichtung (1) nach Anspruch 1, wobei die zweite Federeinrichtung (16) eine Spiralfeder (16) aufweist, deren Randabschnitt mittels einer Kupplung, die im Wesentlichen vom Bajonett-Typ ist, in dem Körper (2) angebracht ist.

3. Vorrichtung (1) nach Anspruch 2, wobei die Wicklung (8) von einem in dem Körper (2) angebrachten Haspelelement (7) gehalten wird, das einen hohlen unteren Abschnitt (7b) aufweist, in welchem die Spiralfeder (16) angebracht ist.

4. Vorrichtung (1) nach Anspruch 3, wobei die Spiralfeder (16) erste Führungsaussparungen (18) im Wechsel mit zweiten Kopplungsaussparungen (19) aufweist und wobei der hohle Abschnitt (7b) des Haspelelements (7) mehrere Führungsvorsprünge (20) aufweist, die mit den ersten Aussparungen (18) der Feder (16) in Eingriff gebracht werden können, um das Einführen der Feder (16) in das Haspelelement (7) bis zu einer Position zu erlauben, in welcher die Feder (16) gedreht werden kann, so dass die Kopplungsaussparungen (19) ausgerichtet sind und mit entsprechenden Halterungen (21) des unteren Abschnitts (7b) des Haspelelements (7) gekoppelt werden können.

5. Behälter für eine Flüssigkeit, insbesondere einer Waschkammer einer Waschmaschine, mit einer Vorrichtung (1) zum Detektieren des Füllstands nach einem oder mehreren der vorstehenden Ansprüche, die so angebracht ist, dass in Betrieb die Öffnung oder der Mund (2c) der ersten Kammer (14) der Flüssigkeit zugewandt ist und von der Flüssigkeit geschlossen wird, wenn der Füllstand eine vorgegebene Höhe überschreitet, wobei die erste Kammer (14) in einer solchen Situation als eine Luftfalle wirkt.

## Revendications

1. Dispositif (1) pour détecter le niveau d'un liquide dans un récipient, particulièrement le bain de lavage d'une machine à laver, comprenant
un corps creux (2) dans lequel il est défini une région intérieure (14, 15) qui est divisée en des première et seconde chambres (14, 15) qui sont séparées de manière étanche l'une de l'autre par un diaphragme élastique (6), la première chambre (14) comportant une ouverture d'entrée (2c) prévue pour être mise en communication pneumatique avec la région qui dans le récipient est au-dessus dudit liquide, la seconde chambre (15) communiquant avec l'atmosphère ;
un enroulement ou bobine (8) monté dans une position fixe dans le corps (2), sur le côté opposé à la première chambre (14) par rapport au diaphragme (6) ;
un noyau (11) couplé au diaphragme (6) et mobile par rapport à l'enroulement (8) de telle manière qu'en fonctionnement l'inductance de l'enroulement (8) varie en fonction de la position dudit noyau (11) ; et
des premiers moyens élastiques (12) tendant à déplacer le noyau (11) vers le diaphragme (6) et des seconds moyens élastiques (16) tendant à s'opposer à l'action des premiers moyens élastiques (12) ;
le dispositif de détection (1) étant **caractérisé en ce que** lesdits seconds moyens élastiques (16) sont disposés dans ladite seconde chambre (15).

2. Dispositif (1) selon la revendication 1, dans lequel lesdits seconds moyens élastiques comprennent un ressort spiral (16) dont la partie périphérique est montée dans le corps (2) par un couplage qui est sensiblement du type à baïonnette.

3. Dispositif (1) selon la revendication 2, dans lequel l'enroulement (8) est supporté par un élément de bobine (7) monté dans le corps (2) et ayant une partie inférieure creuse (7b) dans laquelle est monté ledit ressort spiral (16).

4. Dispositif (1) selon la revendication 3, dans lequel le ressort spiral (16) comporte des premières découpes de guidage (18) alternées avec des secondes découpes de couplage (19), et ladite partie creuse (7b) de l'élément de bobine (7) comporte une pluralité de saillies de guidage (20) adaptées pour venir en prise avec lesdites premières découpes (18) du ressort (16) pour permettre l'introduction du ressort (16) dans l'élément de bobine (7) jusqu'à une position dans laquelle le ressort (16) peut être mis en rotation de telle manière que les découpes de couplage (19) sont alignées et peuvent être couplée avec des formations de retenue (21) correspondantes de ladite partie inférieure (7b) de l'élément de bobine (7).

5. Récipient pour un liquide, particulièrement une chambre de lavage d'une machine à laver, comprenant un dispositif (1) pour détecter le niveau du liquide selon une ou plus des revendications précédentes, monté de telle manière que l'ouverture ou la bouche (2c) de ladite première chambre (14) dans le fonctionnement fait face au dit liquide et est prévue pour être fermée par le liquide quand le niveau de celui-ci augmente au-dessus d'un niveau prédéterminé, ladite première chambre (14) fonctionnant dans une telle situation comme un purgeur d'air.
